# EUROPEAN PATENT SPECIFICATION

(11) **EP 1 191 375 B1**
(45) Date of publication and mention of the grant of the patent: **04.10.2006**
(21) Application number: 01402134.9
(22) Date of filing: 07.08.2001
(51) Int. Cl.: G02B 6/44

(54) **Fabrication process of an improved optical-fiber cable containing thermally bonded fiber optic buffer tubes**
Herstellungsverfahren eines verbesserten faseroptischen Kabels mit thermisch verbundenen faseroptischen Schutzröhren
Procédé de fabrication d'un câble à fibre optique amélioré contenant des tubes de protection de fibres optiques liés thermiquement

(30) Priority: 21.09.2000 FR 0012044; 19.02.2001 US 810221
(43) Date of publication of application: 27.03.2002
(73) Proprietor: Draka Comteq B.V., 1021 JZ Amsterdam (NL)
(72) Inventor: Gaillard, Pierre, 62225 Calais (FR); Bourget, Vincent, 62200 Boulogne sur Mer (FR); Richter, Stefan, Hickory, NC 28602 (US); Stevens, J. Boyet, Maineville, Ohio 45039 (US); Risch, Brian G., Hickory, NC 28602 (US)
(74) Representative: Algemeen Octrooi- en Merkenbureau

(56) References cited:
- EP-A- 0 033 123
- EP-A- 0 518 738
- EP-A- 0 813 084
- EP-A- 0 846 970
- US-A- 5 684 904

## Description

### BACKGROUND OF THE INVENTION

### Field of the Invention

The present invention pertains to an improved fiber-optics cable (referred to as optical-fiber cables herein) and to a corresponding fabrication process. In particular, the present invention pertains to a process of bundling optical fiber buffer tubes, to form an improved flexible optical core, and to an improved flexible optical core assembled in a SZ stranding configuration.

### Discussion of Related Art

There are three general types of optical-fiber cable structures. Typically, for each of the three general structures, the jacket is made of a polymeric material and is extruded around what is commonly referred to as the optical core.

In the first structure, commonly known as a "loose-tube" construction, the optical core includes a central strength member around which buffer tubes are assembled in either a helical or SZ stranding configuration. The buffer tubes contain optical fibers or optical fiber ribbons, and the tube assembly is surrounded by a jacket. In this first structure, the tubes containing the optical fibers have relatively thick and rigid walls, which are made of a polymeric material. With this first structure, the optical fibers can be displaced relative to the tubes, in which they are housed. Cables possessing this first type of structure are described, for example, in U.S. Patent No. 4,366,667 and European Patent EP-A-0,846,970.

In the second structure, the optical core includes a single tube, typically referred to as central tube construction, which is made of a polymeric material and which houses the optical fibers. If necessary, the central tubes include ribbons that may be assembled together in a spiral configuration. The central tube is surrounded by a jacket that is defined by a wall. Strength members can be embedded in the jacket wall.

In the third type of structure, the optical core includes buffer tubes made of polymeric material. The buffer tubes house the optical fibers and are assembled together in a helical or SZ stranding pattern. The buffer tube assembly is surrounded by a jacket, within which strength members are embedded. In this third structure, the buffer tubes are relatively thin and flexible and hold the optical fibers snugly, such that displacement of the optical fibers relative to each other and to the buffer tubes is highly constrained.

For certain installations, optical-fiber cables may be arranged such that, along certain paths, sections of the cable are vertical. In such vertical sections of optical-fiber cable, an optical core assembled in a SZ stranding configuration can unravel due to the effects of gravity, with each buffer tube tending to unwind and spread out vertically in a rectilinear manner. The risk of de-stranding associated with this undesirable phenomenon is particularly significant near the reversal points, where the winding direction of a buffer tube in a SZ stranding configuration reverses. More generally, unraveling and de-stranding can occur whenever the optical core or the optical cable is subjected to a tensile strain, e.g., during manufacturing or installation.

Optical-fiber cables with the first structure typically include a binder, which holds the buffer tubes in position, thereby avoiding the problem of de-stranding. Binders can be used with such optical-fiber cables because of the relative rigidity of the buffer tubes used in the first type of structure. This rigidity prevents any tightening stress exerted by the binder on the buffer tubes from being transmitted to the optical fibers.

However, binders cannot be used satisfactorily on optical-fiber cables with the third, flexible optical core structure because these cables use thin walled buffer tubes that offer little resistance to the crushing stresses that binders can produce. Consequently, the transverse stress exerted by a binder on the buffer tubes is easily transmitted to the optical fibers, thereby subjecting the optical fibers to stresses that can interfere with their optical performance. Thus, another technique is needed to prevent vertical sections of a flexible optical core or elongated core, assembled in a SZ stranding configuration, from de-stranding.

In addition, the use of binders is undesirable, in that they add cost and require special stranding equipment. Furthermore, accessing the cable requires cutting through the binders, leading to an additional access step. Accordingly, an alternative to the use of binders is desirable for these additional reasons.

European patent application EP 0 518 736 discloses a fabrication process for an optical fiber cable comprising an assembly of buffer tubes, a plurality of optical fibers being housed within the buffer tubes, and a jacket surrounding the assembly of buffer tubes. An adhesive is applied onto the surfaces of a central member and/or the buffer tubes before the buffer tubes are stranded around the central member. As a result, the buffer tubes are bonded to one another and to the central member, by means of the adhesive applied, and before the jacket is provided around the assembly.

European patent application EP 0 846 970 discloses a fabrication process for an optical fiber cable comprising an assembly of buffer tubes thermally bonded to one another, wherein a plurality of optical fibers being housed within the buffer tubes, and a jacket made of a jacket material surrounding the assembly of buffer tubes. In a continuous processing the buffer tubes are formed simultaneously by extrusion. The simultaneously formed buffer tubes, still at an elevated temperature, are stranded around a central member, such that the buffer tubes are thermally bonded to one another and to the central member before the jacket material is extruded.

An additional problem with known flexible optical cores, which are assembled in a SZ stranding configuration, is that it is difficult to strand the constituent buffer tubes uniformly, to form an optical core of uniform strand geometry. This difficulty stems from the flexibility of the buffer tubes used in such a core and from the absence of a central strength member to support the buffer tubes and couple them by friction. Accordingly, an improved bundling method is needed to improve the core cohesion and to maintain a certain amount of stranding (i.e., the number of turns in the S or Z direction) through subsequent manufacturing steps.

Preferably, the improved tube bundling technique would provide a buffer tube assembly that will maintain its geometry under load. In particular, ensuring a sufficient amount of stranding is essential for core cohesion and bending properties, and in order to provide predictable mid-span access. However, because flexible optical cores possess no central strength member, mechanical relaxation of the buffer tubes, as well as tension applied on the optical core (e.g. during a jacketing process step, or during routing the optical core in a splice box), may cause the buffer tubes to unravel or de-strand. As indicated above, such unraveling or de-stranding poses potential problems. Accordingly, an improved stranding method is needed to maintain ordered stranding under load.

### SUMMARY OF THE INVENTION

According to one object of the present invention, it is sought to prevent vertical and/or strained sections of flexible buffer tube, fiber optic cable cores from unraveling or de-stranding. Additionally, a second object is to avoid the use of binders, thereby reducing costs, providing a streamlined process, and simplifying access to the cables. According to a third object of the present invention, it is sought to provide an improved stranding for optical cores formed of flexible buffer tubes, in order to promote core cohesion, to maintain a certain amount of stranding through subsequent manufacturing steps, and to maintain a uniform stranding geometry under load.

Starting from EP 0 846 970 as the most pertinent prior art, the present invention achieves these and other objectives by providing a fabrication process for an optical fiber cable comprising an assembly of buffer tubes, a plurality of optical fibers being housed within the buffer tubes of the assembly, and a jacket made of a jacket material surrounding the assembly of buffer tubes, wherein the buffer tubes of the assembly are thermally bonded to one another and the jacket is formed by extruding the jacket material around the assembly of buffer tubes, characterized in that the jacket material comprises a polymeric material, in that the assembly comprises at least two flexible buffer tubes made of a buffer tube material comprising a polymeric material, in that the jacket material for forming the jacket is heated to an extrusion temperature at which the jacket material is extruded, and in that the at least two flexible buffer tubes of the assembly are thermally bonded to one another by heat energy released by the extruded jacket material, wherein the extrusion temperature is controlled by selecting the jacket material and the buffer tube material as to allow the jacket material to be extruded at the extrusion temperature so that the heat energy released by the extruded jacket material causes the at least two flexible buffer tubes of the assembly to be thermally bonded to one another, and as to allow the buffer tube material constituting the at least two flexible buffer tubes of the assembly to be heated by the heat energy released by the extruded jacket material, so that the at least two flexible buffer tubes of the assembly are thermally bonded to one another by the heat energy released by the extruded jacket material without melting the buffer tube material.

According to another characteristic of this process, the jacket is made of polyethylene and the tubes are made of polyvinyl chloride (PVC) or of a thermoplastic elastomer possessing flexible diol segments, whereby the extrusion temperature is between 170 and 240°C. More preferably, the extrusion temperature is between 200 and 240°C.

According to yet another characteristic of this process, at least one filiform strength member is provided at the periphery of the assembly of buffer tubes.

A second embodiment of the present invention provides a fabrication process using a fiber optic buffer tube formed of a low melting point material forming domains and a high melting point material forming a matrix. The domains are embedded in the matrix.

According to a second aspect of the second embodiment, the low and high melting point materials are a low and a high melting point thermoplastic, respectively.

According to a third aspect, the low melting point material constitutes less than forty percent and, more preferably, less than twenty percent of the buffer tube material.

According to a fourth aspect, the buffer tube further includes a filler. Preferably the filler includes calcium carbonate, talc, and/or super-absorbent polymer powder. More preferably the filler constitutes less than forty percent of the buffer tube material. Still more preferably, the low melting point material constitutes less than forty percent of the buffer tube material and the high melting point material constitutes more than fifty percent of the buffer tube material.

According to a fifth aspect, the high melting point material has a melting point which is at least 25° C higher and, preferably, at least 50 ° C higher than the melting point of the low melting point material.

According to a sixth aspect, the low melting point material is ethylene-octene copolymer, ethylene-propylene copolymer, EVA copolymer, EAA copolymer, or some other copolymer or terpolymer of a polyolefin.

According to a seventh aspect, the high melting point material is impact modified polypropylene copolymer or propylene-ethylene copolymer. Preferably, the low melting point material is ethylene-octene copolymer, EVA copolymer, or EAA copolymer. More preferably, the buffer tube further includes a calcium carbonate filler, the high melting point material is a propylene-ethylene copolymer with a melting point above 140 ° C, the low melting point material is an ethylene-octene copolymer with a melting point below 100 ° C, and the domains have a length-scale of 10-100 µm on an outer surface of the buffer tube.

According to yet another aspect, the high melting point material is impact modified polypropylene copolymer, and the low melting point material is very low density polyethylene (VLDPE).

The present invention also provides a method of bonding fiber optic buffer tubes. The method includes bundling a plurality of buffer tubes, which tubes are formed of low melting point domains embedded in a high melting point matrix. The method further includes thermally activating the low melting point domains, thereby softening the domains and causing a portion of the domains to bond to domains of a neighboring buffer tube.

According to another characteristic of this method, the thermal activation step is accomplished by applying a heated jacket to the plurality of bundled buffer tubes.

### BRIEF DESCRIPTION OF THE DRAWINGS

The invention and advantageous refinements thereof are explained in more detail below with the aid of diagrammatic, exemplary embodiments in the drawings, in which:
Figure 1 is a transverse, cross-sectional view of an improved optical-fiber cable according to the present invention;
Figure 2 depicts a buffer tube surface according to a second embodiment of the present invention;
Figure 3(a) illustrates the bundling mechanism for two buffer tubes formed in accordance with the second embodiment; and
Figure 3(b) depicts an optical core including an assembly of buffer tubes according to the second embodiment.

### DETAILED DESCRIPTION OF THE PREFERRED EMBODIMENTS

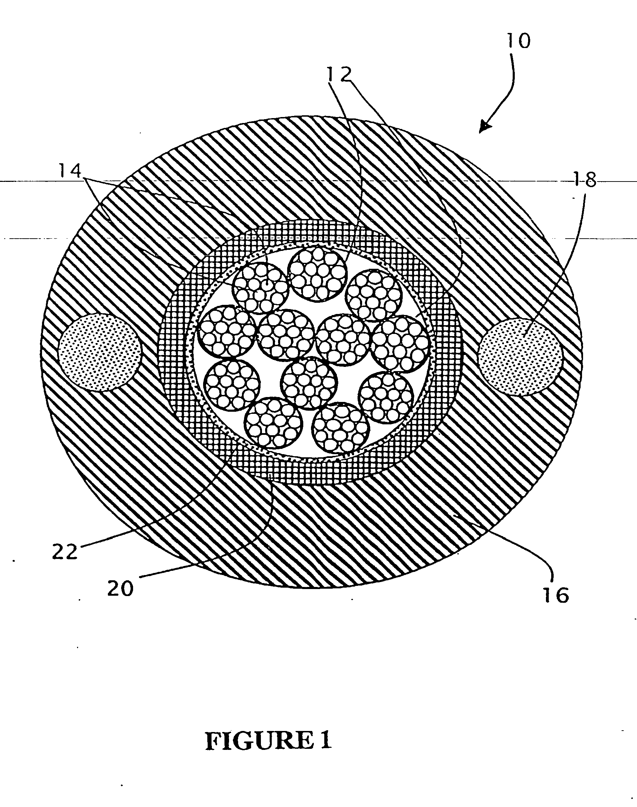

A first embodiment of the present invention will be described with reference to Figure 1. Figure 1 depicts an improved optical-fiber cable according to a first embodiment of the present invention, which cable is designated by reference number 10.

The optical-fiber cable 10 includes an assembly of flexible buffer tubes 12, each of which houses a bundle of standard optical fibers 14. Each buffer tube 12 contains, for example, approximately a dozen optical fibers 14. However, the number of optical fibers 14 may be greater or less than twelve.

In the example illustrated in Figure 1, the optical-fiber cable 10 includes twelve buffer tubes 12. However, the number of buffer tubes 12 may, for example, vary between seven and twenty four.

The assembly of buffer tubes 12 is contained within a jacket 16. Preferably, the buffer tubes 12 span the length of the jacket 16, as in a standard assembly with a helical or SZ stranding configuration.

Strength members 18 providing reinforcement are at the periphery of the assembly of buffer tubes 12. Preferably, the optical-fiber cable 10 possesses two strength members 18, which are diametrically opposed and embedded in a wall that defines the jacket 16. The structure and assembly of the strength members 18 in the jacket 16 are standard.

Preferably, the optical-fiber cable 10 possesses mechanical-reinforcement strands 20, which are positioned inside the jacket 16 and circumscribe the buffer tube assembly, when in an annular assembly (e.g., arranged helically). As an example, the mechanical reinforcement strands 20 are made of aramid.

In addition, the optical-fiber cable 10 preferably includes standard water-proofing elements. Such water-proofing elements may include a superabsorbant tape 22 positioned between the buffer tubes 12 and the jacket 16 and circumscribing the buffer tube assembly. More specifically, the superabsorbant tape 22 is positioned between the buffer tubes 12 and the assembly of reinforcement strands 20 and circumscribes the buffer tube assembly, in the case of a standard annular assembly.

The water-proofing elements may also include expandable elements (not shown in Figure 1) positioned within the jacket 16, in the case of a standard interwoven assembly with buffer tubes 12. These elements may also include a typical filler that is utilized between the optical fibers 14 within the buffer tubes 12.

The jacket 16 is made of a polymeric material, such as medium density polyethylene, which is heated and extruded around the buffer tubes 12, with the latter also being made of a polymeric material. It shall be noted that the walls of the buffer tubes 12 are relatively thin.

According to the first embodiment of the present invention, the buffer tubes 12 are held together compactly by adhesion to one another. This is accomplished during the extrusion of the jacket 16 around the buffer tubes 12, by adjusting the extrusion temperature of the material constituting the jacket 16 so as to cause the buffer tubes 12 to adhere to one another. During extrusion, the heated material of the jacket 16 provides the heat energy necessary to cause the buffer tubes to adhere to one another.

The material of the jacket 16 should be selected so as to allow the material to be heated at a selected temperature that is both suitable to effect an optimal extrusion of the jacket and also sufficient to cause the buffer tubes 12 to adhere to one another. Likewise, the material constituting the buffer tubes 12 should be selected so as to allow the buffer tubes 12 to be heated by the heat energy released by the jacket 16, which is extruded at the selected temperature, and to adhere to one another, without being melted by this heat.

In view of these requirements, the jacket is preferably made of polyethylene, in particular, high-density polyethylene, and the buffer tubes 12 are preferably made of polyvinyl chloride (PVC) or of a thermoplastic elastomer possessing flexible diol segments. (A "thermoplastic elastomer possessing flexible diol segments" is a copolymer possessing segments that are polyether or polymer diol units.)

The thermoplastic elastomer possessing flexible diol segments is selected, for example, from the following group:
(i) polyether esters that include, for example, polyether sequences possessing hydroxy terminals, joined to polyester sequences possessing acid terminals, whereby this structure may also comprise diols (e.g., 1,4-butanediol);
(ii) polyurethane ethers that include, for example, polyether sequences possessing hydroxy terminals, joined to diisocyanates by means of urethane functions;
(iii) polyurethane esters that include, for example, polyester sequences possessing hydroxy terminals, joined to diisocyanates by means of urethane functions;
(iv) polyurethane ether esters that include, for example, polyester sequences and polyether sequences possessing hydroxy terminals, with these sequences being joined to diisocyanate residues by means of urethane functions;
(v) polyether amides (i.e., polyethers with polyamide sequences), which are obtained, for example, by having polyamide sequences that possess diamine chain terminals react with polyoxyalkylene sequences that possess dicarboxylic chain terminals; or, by having polyamide sequences that possess diamine chain terminals or polyamide sequences that possess dicarboxylic chain terminals react with polyetherdiols; whereby, the polyether obtained are therefore polyether ester amides.

In particular, the polyether esters are thermoplastic copolyester elastomers. One example of a such a commercial product is the polymer Hytrel®, by DuPont. The international acronym for these thermoplastic elastomers is TEEE (thermoplastic ether-ester elastomer).

It should be noted that buffer tubes 12 made of a thermoplastic elastomer possessing flexible diol segments tear rather easily, in order to permit easy access to the optical fibers 14 contained in the buffer tubes 12.

Moreover, thermoplastic polyurethane elastomers (TPUs) are polyurethane-based copolymers that may be obtained by having both a polymerdiol (or macroglycol with a molecular weight between 1000 and 3500, for example) and possibly a diol (or chain extender of low molecular weight (generally less than 300) react with a diisocyanate.

Examples of such commercial products include: Elastollan® 1185 (PU-ether), Elastollan® 1190 (PU-ether), Elastollan® C85 (PU-ester), Elastollan® C90 (PU-ester), and both Desmopan® 588 (PU-ether ester) and Desmopan® 385 (PU-ether ester), with the polymers of the Elastollan® product line being available from BASF and those of the Desmopan® product line from Bayer.

As an example, when it is extruded around the assembly of buffer tubes 12, a polyethylene jacket 16 is heated at a temperature ranging between 170 and 240 ° C, and preferably between 200 and 220 ° C. At this temperature, the jacket 16 releases heat to the buffer tubes 12, which heat is sufficient to pass through any possible layers of reinforcement strands or water-proofing elements and to cause the buffer tubes 12 to adhere to one another, without causing them to melt together.

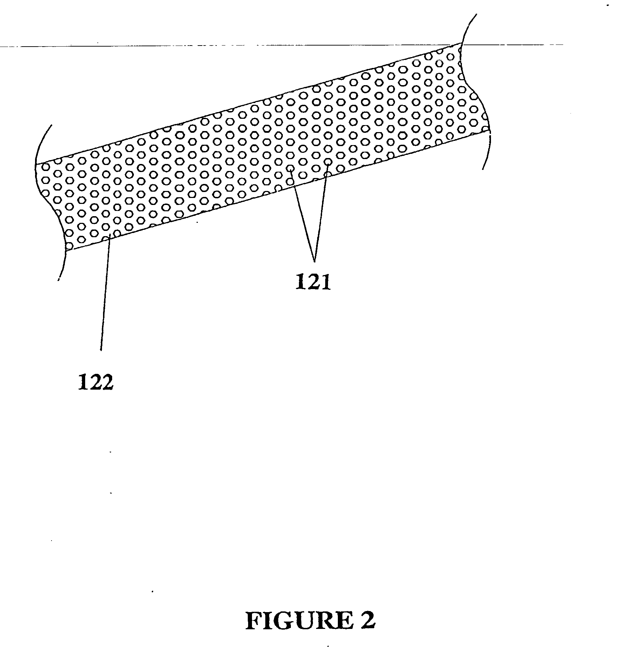

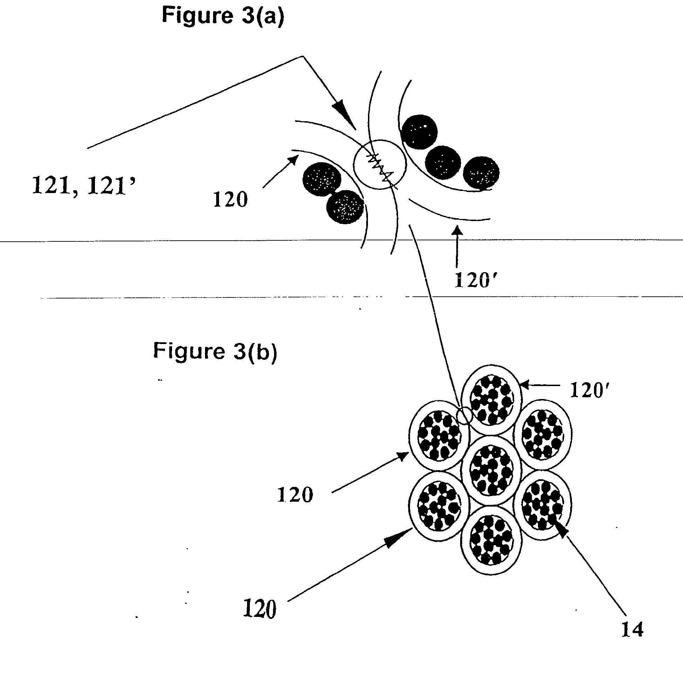

A second embodiment of the present invention will be described with reference to Figures 2, 3(a), and 3(b). Figure 2 illustrates a surface of a buffer tube 120 according to the second embodiment. As shown in Figure 2, the buffer tube 120 contains low melting point domains 121 embedded in a higher melting point matrix 122. Preferably, the low melting point domains 121 are formed from a low melting point thermoplastic, while the matrix 122 is formed from a high melting point thermoplastic. Additionally, the buffer tube 120 may contain filler, such as calcium carbonate, talc, or a super absorbent polymer powder.

After being arranged in an assembly, as shown in Figure 3(b), the buffer tubes are thermally activated to soften the low melting point domains 121. The domains can be activated through jacketing, as described above with respect to the first embodiment. The activation temperature is selected to be sufficiently high to soften the domains 121, while being suitably low so that the high melting point matrix 122 retains its shape. At such activation temperatures, the low melting point domains 121 melt and become tacky and thereby bond to neighboring low melting point domains 121' on adjacent buffer tubes 120', as is illustrated in Figures 3(a) and 3(b). The buffer tubes 120, 120' are then cooled. In this manner, individual buffer tubes 120 are bundled, for example in the assembly shown in Figure 3(b).

Advantageously, the level of adhesion between the tubes can be controlled through the thermal activation time and temperature, the level of filler, the amounts of low and high melting point components used, and the respective melting points of the low and high melting point components.

The invention is not limited to any specific ratio of filler and low and high melting components. However, the level of adhesion between the tubes can be advantageously adjusted by controlling the ratio of the amounts of filler, low melting point material, and high melting point material, such that the low melting point material constitutes less than 40% of the resulting material, in order to ensure continuity of the high melting point phase. More preferably, the low melting point material constitutes less than 20% of the resulting material. Preferably, less than 40% of the material forming the buffer tubes 120 constitutes filler, such as calcium carbonate, talc, or superabsorbent polymer powder. Preferably, the high melting point material constitutes > 50% of the material forming the buffer tubes 120, in order to ensure continuity of this phase.

Preferably, the matrix 122 material has a melting point that is at least 25 ° C higher than that of the domain 121 material. More preferably, the melting point of the matrix material is at least 50°C higher than that of the domain material. Although buffer tubes 120 according to the second embodiment may be formed from a wide variety of materials, preferred materials for the high melting point matrix include impact modified polypropylene copolymer and propylene-ethylene copolymer. Preferred materials for the low melting point domains include low melting point olefin based copolymers or terpolymers, having melting points below 120 ° C, and preferably below 105 ° C, such as ethylene-octene copolymer (melting point 70-105 ° C), EVA copolymer (melting point 90-110 ° C), and EAA copolymer (melting point 90-110°C).

Examples of such commercial products include: Engage ® and Exact ® (Ethylene Octene Copolymer), Nucrel ® (EVA), Escor ® (EAA), and Primacor ® (EMAA). The Engage ® and Nucrel ® product lines are available from DuPont. Exact ® and Escor ® are available from Exxon, and Primacor® is available from Dow.

In a first example, a propylene-ethylene copolymer with a melting point above 140° C was used to form the high melting point matrix 122. An ethylene-octene copolymer with a melting point below 100 ° C was used to form the low melting point domains 121. In addition, the buffer tubes 120 included a calcium carbonate filler. The buffer tube had 10-100 µm domains 121 on its outer surface.

A second preferred combination of high and low melting point materials includes a matrix formed of impact modified polypropylene copolymer, with a melting point above 150° C, and domains formed of very low density polyethylene (VLDPE), with a melting point of about 90° C.

Advantageously, the assembly of buffer tubes 120, according to the second embodiment, remains bundled without the use of binders. Additionally, individual buffer tubes 120 are removable from the assembly of buffer tubes 130, without damaging either the buffer tubes 120 or the optical fibers contained therein. In addition, the second embodiment is advantageous relative to bonding along the entire length of the buffer tubes. For example, the surface aspect of the buffer tubes 120 is better after separation, with the adhesion according to the second embodiment, relative to tubes which were bonded along their entire surface.

A third embodiment of the present invention provides a stranded optical core formed of flexible buffer tubes. Notably, such optical cores do not include a central strength member.

The third embodiment overcomes the shortcomings of known stranded, flexible buffer tube cables by bonding the buffer tubes at the stranding point. Preferably, the bonds between neighboring buffer tubes are limited such that the buffer tubes can be separated (e.g., during cable splicing operations) by application of a separation force of less than 100 g, and more preferably 50 g.

According to a first aspect, the buffer tubes are bonded by application of ultra-violet (UV) curable materials to the tubes at the stranding point. These materials can be applied by a continuous or intermittent flood, extrusion, or spray. The UV curable material can be applied before or during bundling. After formation, the optical core is then subjected to UV radiation to bond neighboring buffer tubes. UV cured materials such as urethane-acrylate copolymers or other acrylate copolymers can be used to accomplish such bonding.

The present invention provides materials and methods for bundling or stranding optical fiber buffer tubes to form an improved flexible optical core, including an improved flexible optical core assembled in a stranded configuration. The present invention is advantageous in that the assembly of buffer tubes (whether in a helical or SZ stranding configuration) is unlikely to unravel or de-strand under the effects of gravity or other externally applied forces. In particular, the optical core is protected against unraveling because of the adhesion of the buffer tubes to one another. In addition, the buffer tubes are easily separated, despite this adhesion, by exerting a relatively minimal force, generally not exceeding one (1) Newton on each buffer tube. This easy separation affords easy access to the optical fibers during connection operations. Furthermore, the present invention avoids the use of binders, thereby advantageously permitting use of flexible buffer tube cables.

## Claims

1. A fabrication process for an optical fiber cable (10) comprising an assembly of buffer tubes (12), a plurality of optical fibers (14) being housed within said buffer tubes (12) of said assembly, and a jacket (16) made of a jacket material surrounding said assembly of buffer tubes (12), wherein said buffer tubes (12) of said assembly are thermally bonded to one another, and said jacket (16) is formed by extruding said jacket material around said assembly of buffer tubes (12), **characterized in that** said jacket material comprises a polymeric material, **in that** said assembly comprises at least two flexible buffer tubes (12) made of a buffer tube material comprising a polymeric material, **in that** said jacket material for forming said jacket (16) is heated to an extrusion temperature at which said jacket material is extruded around said assembly comprising said at least two flexible buffer tubes (12), and **in that** said at least two flexible buffer tubes (12) of said assembly are thermally bonded to one another by heat energy released by said extruded jacket material, wherein said extrusion temperature is controlled by selecting said jacket material and said buffer tube material as to allow said jacket material to be extruded at said extrusion temperature, so that heat energy released by said extruded jacket material causes said at least two flexible buffer tubes (12) of said assembly to be thermally bonded to one another, and as to allow said buffer tube material constituting said at least two flexible buffer tubes (12) of said assembly to be heated by the heat energy released by said extruded jacket material, so that said at least two flexible buffer tubes (12) of said assembly are thermally bonded to one another by the heat energy released by said extruded jacket material without melting said buffer tube material.

2. A fabrication process according to claim 1, wherein said jacket (16) is made of a jacket material comprising polyethylene and said flexible buffer tubes (12) are made of a buffer tube material comprising polyvinyl chloride.

3. A fabrication process according to claim 1, wherein said jacket (16) is made of a jacket material comprising polyethylene and said flexible buffer tubes (12) are made of a buffer tube material comprising a thermoplastic elastomer possessing flexible diol segments.

4. A fabrication process according to claim 2 or 3, wherein said jacket material is heated to an extrusion temperature between 170 and 240 °C.

5. A fabrication process according to claim 4, wherein said jacket material is heated to an extrusion temperature between 200 and 220 °C.

6. A fabrication process according to claim 1, wherein said jacket (16) is made of a jacket material comprising a polypropylene copolymer.

7. A fabrication process according to claim 1, wherein said flexible buffer tubes (12) are contained within said jacket (16) in a helical or SZ stranding configuration.

8. A fabrication process according to any of the claims 1 to 6, wherein mechanical reinforcement strands (20) are positioned between said assembly of flexible buffer tubes (12) and said jacket (16), and wherein said assembly of flexible buffer tubes (12) is an annular assembly.

9. A fabrication process according to claim 8, wherein said mechanical reinforcement (20) strands comprise aramid.

10. A fabrication process according to claim 8, wherein said mechanical reinforcemnets (20) strands comprise glass.

11. A fabrication process according to any of the claims 8 to 10, wherein said reinforcement strands (20) are arranged helically.

12. A fabrication process according to any of the claims 1 to 6 and 8 to 11, wherein water-proofing tape is positioned between said assembly of flexible buffer tubes (12) and said jacket (16), and wherein said assembly of flexible buffer tubes (12) is an annular assembly.

13. A fabrication process according to any of the claims 1 to 6, wherein expandable water-proofing elements (22) are positioned between said assembly of flexible buffer tubes (12) and said jacket (16), and wherein said assembly of flexible buffer tubes (12) is an interwoven assembly of buffer tubes (12).

14. A fabrication process according to any of the claims 1 to 13, wherein a filler material is utilized within said flexible buffer tubes (12).

15. A fabrication process according to any of the claims 1 to 14, wherein at least one strength member (18) is provided at the periphery of said assembly of flexible buffer tubes (12).

16. A fabrication process according to claim 15, wherein said strength member (18) is embedded in a wall of said jacket (16).

17. A fabrication process according to any of the claims 1 to 16, wherein said flexible buffer tubes (12, 120) are made of a buffer tube material comprising a low melting point material forming domains (121) and a high melting point material forming a matrix (122), and wherein said domains (121) are embedded in said matrix (122).

18. A fabrication process according to claim 17, wherein said low melting point material comprises a low melting point thermoplastic, and said high melting point material comprises a high melting point thermoplastic.

19. A fabrication process according to claim 17, wherein said low melting point material constitutes less than forty percent of said buffer tube material.

20. A fabrication process according to claim 19 wherein said low melting point material constitutes less than twenty percent of said buffer tube material.

21. A fabrication process according to any of the claims 17 to 20, wherein said buffer tube material comprises a filler material.

22. A fabrication process according to claim 21, wherein said filler material is selected from a group consisting of calcium carbonate, talc, and super-absorbent polymer powder.

23. A fabrication process according to claim 21 or 22, wherein said filler constitutes less than forty percent of a buffer tube material comprising said filler and said low and high melting point material

24. A fabrication process according to claim 23, wherein said low melting point material constitutes less than forty percent of said buffer tube material and said high melting point material constitutes more than fifty percent of said buffer tube material.

25. A fabrication process according to any of the claims 17 to 24, wherein said high melting point material has a melting point which is at least 25 ° C higher than a melting point of said low melting point material.

26. A fabrication process according to claim 25, wherein the melting point of said high melting point material is at least 50 °C higher than the melting point of said low melting point material.

27. A fabrication process according to claim 17, wherein said low melting point material comprises a low melting point olefin based copolymer or terpolymer.

28. A fabrication process according to claim 27, wherein said low melting point material is selected from the group consisting of ethylene-octene copolymer, EVA copolymer and EAA copolymer.

29. A fabrication process according to claim 17, 27 or 28, wherein said high melting point material comprises impact modified polypropylene copolymer or polypropylene-ethylene copolymer.

30. A fabrication process according to claim 29, wherein, said high melting point material comprises a propylene-ethylene copolymer with a melting point above 140°C, wherein said low melting point material comprises an ethylene-octene copolymer with a melting point below 100°C, and where in said domains have a length-scale of 10-100 µm on an outer surface of said buffer tube.

31. A fabrication process according to claim 29, wherein said high melting point material comprises impact modified polypropylen copolymer, and wherein said low melting point material comprises very low density polyethylene.

32. A fabrication process according to claim 1, comprising bundling of a plurality of buffer tubes having low melting point domains embedded in a high melting point matrix, and thermally activating the low melting point domains, thereby softening the domains and causing a portion of the domains to bond to domains of a neighbouring buffer tube.

33. A fabrication process according to claim 32, wherein said thermal activation step is accompanied by applying a heated jacket to the plurality of bundled buffer tubes.

## Patentansprüche

1. Herstellungsverfahren für ein optisches Faserkabel (10), umfassend eine Anordnung von Bündeladern (12), eine Mehrzahl von optischen Fasern (14), die innerhalb der Bündeladern (12) der Anordnung untergebracht sind, und einen Mantel (16), der aus einem Mantelmaterial hergestellt ist, das die Anordnung der Bündeladern (12) umgibt, wobei die Bündeladern (12) der Anordnung thermisch aneinander gebunden sind, und der Mantel (16) gebildet worden ist durch Extrudieren des Mantelmaterials um die Anordnung der Bündeladern (12), **dadurch gekennzeichnet, dass** das Mantelmaterial ein polymeres Material umfasst, dass die Anordnung mindestens zwei flexible Bündeladern (12) umfasst, die aus einem Bündeladermaterial hergestellt worden sind, das ein polymeres Material umfasst, dass das Mantelmaterial zur Bildung des Mantels (16) auf eine Extrusionstemperatur erhitzt wird, bei der das Mantelmaterial um die Anordnung herum extrudiert wird, die die mindestens zwei flexiblen Bündeladern (12) umfasst, und dass die mindestens zwei flexiblen Bündeladern (12) der Anordnung thermisch aneinander gebunden werden durch Wärmeenergie, die von dem extrudierten Mantelmaterial freigesetzt wird, wobei die Extrusionstemperatur kontrolliert wird durch Auswählen des Mantelmaterials und des Bündeladermaterials, sodass das Mantelmaterial bei der Extrusionstemperatur extrudiert werden kann, sodass die von dem extrudierten Mantelmaterial freigesetzte Wärmeenergie die mindestens zwei flexiblen Bündeladern (12) der Anordnung thermisch aneinander bindet und sodass das Bündeladermaterial, das die mindestens zwei flexiblen Bündeladern (12) der Anordnung bildet, durch die von dem extrudierten Mantelmaterial freigesetzte Wärmeenergie erwärmt wird, sodass die mindestens zwei flexiblen Bündeladern (12) der Anordnung thermisch aneinander gebunden werden durch die von dem extrudierten Mantelmaterial freigesetzte Wärmeenergie, ohne dass das Bündeladermaterial geschmolzen wird.

2. Herstellungsverfahren nach Anspruch 1, wobei der Mantel (16) hergestellt wird aus einem Mantelmaterial, umfassend Polyethylen, und die flexiblen Bündeladern (12) hergestellt werden aus einem Bündeladermaterial, umfassend Polyvinylchlorid.

3. Herstellungsverfahren nach Anspruch 1, wobei der Mantel (16) herstellt wird aus einem Mantelmaterial, umfassend Polyethylen, und die flexiblen Bündeladern (12) hergestellt werden aus einem Bündeladermaterial, umfassend ein thermoplastisches Elastomer mit flexiblen Diolsegmenten.

4. Herstellungsverfahren nach Anspruch 2 oder 3, wobei das Mantelmaterial auf eine Extrusionstemperatur zwischen 170 und 240°C erwärmt wird.

5. Herstellungsverfahren nach Anspruch 4, wobei das Mantelmaterial auf eine Extrusionstemperatur zwischen 200 und 220°C erwärmt wird.

6. Herstellungsverfahren nach Anspruch 1, wobei der Mantel (16) hergestellt wird aus einem Mantelmaterial, umfassend ein Polypropylencopolymer.

7. Herstellungsverfahren nach Anspruch 1, wobei die flexiblen Bündeladern (12) in einer helikalen oder SZ-Stranding-Konfiguration innerhalb des Mantels (16) enthalten sind.

8. Herstellungsverfahren nach einem der Ansprüche 1 bis 6, wobei mechanische Verstärkungsstränge (20) zwischen der Anordnung flexibler Bündeladern (12) und dem Mantel (16) angeordnet sind und wobei die Anordnung flexibler Bündeladern (12) eine ringförmige Anordnung ist.

9. Herstellungsverfahren nach Anspruch 8, wobei die mechanischen Verstärkungsstränge (20) Aramid umfassen.

10. Herstellungsverfahren nach Anspruch 8, wobei die mechanischen Verstärkungsstränge (20) Glas umfassen.

11. Herstellungsverfahren nach einem der Ansprüche 8 bis 10, wobei die Verstärkungsstränge (20) helikal angeordnet sind.

12. Herstellungsverfahren nach einem der Ansprüche 1 bis 6 und 8 bis 11, wobei ein Wasserschutzband zwischen der Anordnung flexibler Bündeladern (12) und dem Mantel (16) angeordnet ist und wobei die Anordnung flexibler Bündeladern (12) eine ringförmige Anordnung ist.

13. Herstellungsverfahren nach einem der Ansprüche 1 bis 6, wobei expandierbare Wasserschutzelemente (22) zwischen der Anordnung flexibler Bündeladern (12) und dem Mantel (16) angeordnet sind und wobei die Anordnung der flexiblen Bündeladern (12) eine geflochtene Anordnung von Bündeladern (12) ist.

14. Herstellungsverfahren nach einem der Ansprüche 1 bis 13, wobei ein Füllmaterial innerhalb der flexiblen Bündeladern (12) verwendet wird.

15. Herstellungsverfahren nach einem der Ansprüche 1 bis 14, wobei mindestens ein Verstärkungselement (18) an der Peripherie der Anordnung flexibler Bündeladern (12) angebracht ist.

16. Herstellungsverfahren nach Anspruch 15, wobei das Verstärkungselement (18) in einer Wand des Mantels (16) eingebettet ist.

17. Herstellungsverfahren nach einem der Ansprüche 1 bis 16, wobei die flexiblen Bündeladern (12, 120) hergestellt werden aus einem Bündeladermaterial, umfassend ein domänenbildendes Material mit niedrigem Schmelzpunkt (121), und aus einem matrixbildenden Material mit hohem Schmelzpunkt (122) und wobei die Domänen (121) in der Matrix (122) eingebettet werden.

18. Herstellungsverfahren nach Anspruch 17, wobei das Material mit niedrigem Schmelzpunkt ein thermoplastisches Material mit niedrigem Schmelzpunkt umfasst und das Material mit hohem Schmelzpunkt ein thermoplastisches Material mit hohem Schmelzpunkt umfasst.

19. Herstellungsverfahren nach Anspruch 17, wobei das Material mit niedrigem Schmelzpunkt weniger als 40% des Bündeladermaterials ausmacht.

20. Herstellungsverfahren nach Anspruch 19, wobei das Material mit niedrigem Schmelzpunkt weniger als 20% des Bündeladermaterials ausmacht.

21. Herstellungsverfahren nach einem der Ansprüche 17 bis 20, wobei das Bündeladermaterial ein Füllmaterial umfasst.

22. Herstellungsverfahren nach Anspruch 21, wobei das Füllmaterial ausgewählt ist aus der Gruppe, bestehend aus Calciumcarbonat, Talk, und superabsorbierendem Polymerpulver.

23. Herstellungsverfahren nach einem der Ansprüche 21 oder 22, wobei das Füllmaterial weniger als 40% des Bündeladermaterials, umfassend das Füllmaterial und die Materialien mit niedrigem und hohem Schmelzpunkt, ausmacht.

24. Herstellungsverfahren nach Anspruch 23, wobei das Material mit niedrigem Schmelzpunkt weniger als 40% des Bündeladermaterials ausmacht und das Material mit hohem Schmelzpunkt mehr als 50% des Bündeladermaterials ausmacht.

25. Herstellungsverfahren nach einem der Ansprüche 17 bis 24, wobei das Material mit hohem Schmelzpunkt einen Schmelzpunkt besitzt, der mindestens 25°C höher liegt als der Schmelzpunkt des Materials mit niedrigem Schmelzpunkt.

26. Herstellungsverfahren nach Anspruch 25, wobei der Schmelzpunkt des Materials mit hohem Schmelzpunkt mindestens 50°C höher liegt als der Schmelzpunkt des Materials mit niedrigem Schmelzpunkt.

27. Herstellungsverfahren nach Anspruch 17, wobei das Material mit niedrigem Schmelzpunkt ein Copolymer oder Terpolymer auf Olefinbasis mit niedrigem Schmelzpunkt umfasst.

28. Herstellungsverfahren nach Anspruch 27, wobei das Material mit niedrigem Schmelzpunkt ausgewählt ist aus der Gruppe, bestehend aus Ethylen-Octen-Copolymer, EVA-Copolymer und EAA-Copolymer.

29. Herstellungsverfahren nach Anspruch 17, 27 oder 28, wobei das Material mit hohem Schmelzpunkt schlagzähigkeitsmodifiziertes Polypropylen-Copolymer oder Polypropylen-Ethylen-Copolymer umfasst.

30. Herstellungsverfahren nach Anspruch 29, wobei das Material mit hohem Schmelzpunkt ein Propylen-Ethylen-Copolymer mit einem Schmelzpunkt oberhalb von 140°C umfasst, wobei das Material mit niedrigem Schmelzpunkt ein Ethylen-Octen-Copolymer mit einem Schmelzpunkt unterhalb von 100°C umfasst und wobei die Domänen eine Längengrößenordnung von 10 bis 100 µm auf der äußeren Oberfläche der Bündelader besitzen.

31. Herstellungsverfahren nach Anspruch 29, wobei das Material mit hohem Schmelzpunkt ein schlagzähigkeitsmodifiziertes Polypropylen-Copolymer umfasst und wobei das Material mit niedrigem Schmelzpunkt ein Polyethylen mit sehr geringer Dichte umfasst.

32. Herstellungsverfahren nach Anspruch 1, umfassend das Bündeln einer Mehrzahl von Bündeladern mit Domänen von niedrigem Schmelzpunkt, die in einer Matrix mit hohem Schmelzpunkt eingebettet sind und das thermische Aktivieren der Domänen mit niedrigem Schmelzpunkt, wodurch die Domänen erweicht werden und ein Teil der Domänen an Domänen einer benachbarten Bündelader gebunden wird.

33. Herstellungsverfahren nach Anspruch 32, wobei die thermische Aktivierungsstufe begleitet wird vom Aufbringen eines erwärmten Mantels auf die Mehrzahl der gebündelten Bündeladern.

## Revendications

1. Processus de fabrication pour un câble à fibres optiques (10) comprenant un ensemble de tubes de protection (12), une pluralité de fibres optiques (14) logées dans lesdits tubes de protection (12) dudit ensemble, et une gaine (16) faite d'un matériau de gaine entourant ledit ensemble de tubes de protection (12), dans lequel lesdits tubes de protection (12) dudit ensemble sont thermiquement liés les uns aux autres, et ladite gaine (16) est formée en extrudant ledit matériau de gaine autour dudit ensemble de tubes de protection (12), **caractérisé en ce que** ledit matériau de gaine comprend un matériau polymère, **en ce que** ledit ensemble comprend au moins deux tubes de protection flexibles (12) fait d'un matériau de tube de protection comprenant un matériau polymère, **en ce que** ledit matériau de gaine pour former ladite gaine (16) est chauffé à une température d'extrusion à laquelle ledit matériau de gaine est extrudé autour dudit ensemble comprenant au moins deux tubes flexibles de protection (12), et **en ce que** lesdits au moins deux tubes flexibles de protection (12) dudit ensemble sont thermiquement liés les uns aux autres par l'énergie thermique dégagée à travers le matériau de gaine extrudé, dans lequel ladite température d'extrusion est contrôlée en sélectionnant ledit matériau de gaine et ledit matériau de tube de protection pour permettre audit matériau de gaine d'être extrudé à ladite température d'extrusion, de sorte que l'énergie thermique dégagée par ledit matériau de gaine extrudé fait qu'au moins deux tubes de protection flexibles (12) dudit ensemble soient thermiquement liés les uns aux autres, et de manière à permettre audit matériau de tube de protection constituant au moins deux tubes flexibles de protection (12) dudit ensemble d'être chauffé par l'énergie thermique dégagée à travers le matériau de gaine extrudé, de sorte que lesdits au moins deux tubes de protection flexibles (12) dudit ensemble soient thermiquement liés les uns aux autres par l'énergie thermique dégagée à travers le matériau de gaine extrudé sans faire fondre ledit matériau de tube de protection.

2. Processus de fabrication selon la revendication 1, dans lequel ladite gaine (16) est faite d'un matériau de gaine comprenant du polyéthylène et lesdits tubes de protection flexibles (12) sont faits d'un matériau de tube de protection comprenant du poly(chlorure de vinyle).

3. Processus de fabrication selon la revendication 1, dans lequel ladite gaine (16) est faite d'un matériau de gaine comprenant du polyéthylène et lesdits tubes de protection flexibles (12) sont faits d'un matériau de tube de protection comprenant un élastomère thermoplastique possédant des segments de diol flexibles.

4. Processus de fabrication selon la revendication 2 ou 3, dans lequel ledit matériau de gaine est chauffé à une température d'extrusion comprise entre 170 et 240°C.

5. Processus de fabrication selon la revendication 4, dans lequel ledit matériau de gaine est chauffé à une température d'extrusion comprise entre 200 et 220°C.

6. Processus de fabrication selon la revendication 1, dans lequel ladite gaine (16) est faite d'un matériau de gaine comprenant un copolymère de polypropylène.

7. Processus de fabrication selon la revendication 1, dans lequel lesdits tubes de protection flexibles (12) sont contenus dans ladite gaine (16) dans une configuration d'assemblage hélicoïdale ou SZ.

8. Processus de fabrication selon l'une quelconque des revendications 1 à 6, dans lequel des fils de renfort mécanique (20) sont placés entre ledit ensemble de tubes de protection flexibles (12) et ladite gaine (16), et dans lequel ledit ensemble de tubes de protection flexibles (12) est un ensemble annulaire.

9. Processus de fabrication selon la revendication 8, dans lequel lesdits fils de renfort mécanique (20) comprennent de l'aramide.

10. Processus de fabrication selon la revendication 8, dans lequel lesdits fils de renfort mécanique (20) comprennent du verre.

11. Processus de fabrication selon l'une quelconque des revendications 8 à 10, dans lequel lesdits fils de renfort (20) sont disposés hélicoïdalement.

12. Processus de fabrication selon l'une quelconque des revendications 1 à 6 et 8 à 11, dans lequel une bande d'imperméabilisation est placée entre ledit ensemble de tubes de protection flexibles (12) et ladite gaine (16), et dans lequel ledit ensemble de tubes de protection flexibles (12) est un ensemble annulaire.

13. Processus de fabrication selon l'une quelconque des revendications 1 à 6, dans lequel des éléments d'imperméabilisation extensibles (22) sont placés entre ledit ensemble de tubes de protection flexibles (12) et ladite gaine (16), et dans lequel ledit ensemble de tubes de protection flexibles (12) est un ensemble entrelacé de tubes de protection (12).

14. Processus de fabrication selon l'une quelconque des revendications 1 à 13, dans lequel un matériau de charge est utilisé à l'intérieur desdits tubes flexibles de protection (12).

15. Processus de fabrication selon l'une quelconque des revendications 1 à 14, dans lequel au moins un élément de renforcement (18) est fourni à la périphérie dudit ensemble de tubes de protection flexibles (12).

16. Processus de fabrication selon la revendication 15, dans lequel ledit élément de renforcement (18) est intégré dans une paroi de ladite gaine (16).

17. Processus de fabrication selon l'une quelconque des revendications 1 à 16, dans lequel lesdits tubes de protection flexibles (12, 120) sont faits d'un matériau de tube de protection comprenant un matériau à point de fusion bas formant des domaines (121) et un matériau à point de fusion élevé formant une matrice (122), et dans lequel lesdits domaines (121) sont intégrés dans ladite matrice (122).

18. Processus de fabrication selon la revendication 17, dans lequel ledit matériau à point de fusion bas comprend un thermoplastique à point de fusion bas, et ledit matériau à point de fusion élevé comprend un thermoplastique à point de fusion élevé.

19. Processus de fabrication selon la revendication 17, dans lequel ledit matériau à point de fusion bas constitue moins de quarante pour cent du matériau desdits tubes de protection.

20. Processus de fabrication selon la revendication 19. dans lequel ledit matériau à point de fusion bas constitue moins de vingt pour cent du matériau desdits tubes de protection.

21. Processus de fabrication selon l'une quelconque des revendications 17 à 20, dans lequel ledit matériau de tube de protection comprend un matériau de charge.

22. Processus de fabrication selon la revendication 21, dans lequel ledit matériau de charge est sélectionné à partir d'un groupe constitué de carbonate de calcium, de talc et de poudre de polymère super absorbante.

23. Processus de fabrication selon la revendication 21 ou 22, dans lequel ladite charge constitue moins de quarante pour cent d'un matériau de tube de protection comprenant ladite charge et ledit matériau à point de fusion bas et élevé.

24. Processus de fabrication selon la revendication 23, dans lequel ledit matériau à point de fusion bas constitue moins de quarante pour cent du matériau desdits tubes de protection et ledit matériau à point de fusion élevé constitue plus de cinquante pour cent du matériau desdits tubes de protection.

25. Processus de fabrication selon l'une quelconque des revendications 17 à 24, dans lequel ledit matériau à point de fusion élevé a un point de fusion qui est d'au moins 25°C supérieur à un point de fusion dudit matériau à point de fusion bas.

26. Processus de fabrication selon la revendication 25, dans lequel le point de fusion dudit matériau à point de fusion élevé est d'au moins 50°C supérieur au point de fusion dudit matériau à point de fusion bas.

27. Processus de fabrication selon la revendication 17, dans lequel ledit matériau à point de fusion bas comprend un copolymère ou terpolymère à base d'oléfine à point de fusion bas.

28. Processus de fabrication selon la revendication 27, dans lequel ledit matériau à point de fusion bas est choisi à partir du groupe constitué de copolymère d'éthylène octène, de copolymère EVA et de copolymère EAA.

29. Processus de fabrication selon la revendication 17, 27 ou 28, dans lequel ledit matériau à point de fusion élevé comprend du copolymère de polypropylène à impact modifié ou du copolymère d'éthylène propylène.

30. Processus de fabrication selon la revendication 29, dans lequel ledit matériau à point de fusion élevé comprend un copolymère d'éthylène propylène avec un point de fusion supérieur à 140°C, dans lequel ledit matériau à point de fusion bas comprend un copolymère d'éthylène octène avec un point de fusion inférieur à 100°C, et dans lequel lesdits domaines ont une échelle de longueur de 10 à 100 µm sur une surface extérieure dudit tube de protection.

31. Processus de fabrication selon la revendication 29, dans lequel ledit matériau à point de fusion élevé comprend du copolymère de polypropylène à impact modifié, et dans lequel ledit matériau à point de fusion bas comprend du polyéthylène à très basse densité.

32. Processus de fabrication selon la revendication 1, comprenant la mise en faisceau d'une pluralité de tubes de protection ayant des domaines à point de fusion bas intégrés dans une matrice à point de fusion élevé, et activant thermiquement les domaines à point de fusion bas, ramollissant ainsi les domaines et faisant une partie des domaines se lier aux domaines d'un tube de protection voisin.

33. Processus de fabrication selon la revendication 32, dans lequel ladite étape d'activation thermique est accompagnée par l'application d'une gaine chauffée sur la pluralité de tubes de protection mis en faisceau.
